# EUROPÄISCHE PATENTSCHRIFT

(11) **EP 1 219 510 B1**
(45) Veröffentlichungstag und Bekanntmachung des Hinweises auf die Patenterteilung: **12.04.2006**
(21) Anmeldenummer: 01250452.8
(22) Anmeldetag: 27.12.2001
(51) Int. Cl.: B60R 22/44, B60R 22/34, B60R 22/28

(54) **Kraftbegrenzer in einem Gurtaufroller**
Belt force limiting device in a seatbelt retractor
Limiteur de force dans un enrouleur de ceinture de sécurité

(30) Priorität: 28.12.2000 DE 10065509
(43) Veröffentlichungstag der Anmeldung: 03.07.2002
(73) Patentinhaber: TAKATA-PETRI (Ulm) GmbH, 89081 Ulm (DE)
(72) Erfinder: Wahl, Norbert, 73235 Weilheim (DE); Glinka, Oliver, 89081 Ulm (DE); Schrade, Wolfgang, 89134 Blaustein (DE); Klingauf, Gerhard, 88481 Balzheim (DE); Mauz, Andreas, 89079 Ulm (DE)
(74) Vertreter: Baumgärtel, Gunnar

(56) Entgegenhaltungen:
- EP-A- 1 060 962
- DE-A- 19 927 731
- DE-U- 29 613 044
- DE-U- 29 906 629
- US-A- 4 564 155
- US-A- 5 333 906

## Beschreibung

Die Erfindung bezieht sich auf einen Gurtkraftbegrenzer und ein Rückhalteverfahren für Fahrzeuginsassen.

Insbesondere und nicht ausschließlich betrifft die vorliegende Erfindung ein Verfahren zur Verringerung der Verletzungsgefahr eines Fahrzeuginsassen mit Hilfe eines Rückhaltsystems, das einen Crash-Sensor, einen Dreipunkt-Sicherheitsgurt und eine Einrichtung zur Gurtkraftbegrenzung aufweist.

Aus dem Stand der Technik ist es bekannt, Fahrzeuginsassen mit Hilfe eines Dreipunkt-Sicherheitsgurtes im Falle eines Unfalls zu schützen, wobei bei Auslösen des Crash-Sensors zunächst ein Gurtstraffer aktiviert wird und nach Straffen des Gurtbandes und Festklemmen der Gurtspindel eine Einrichtung zur Energieabsorption aktiviert wird, die die auf den Fahrzeuginsassen wirkende Gurtkräfte begrenzt.

Es sind Gurtkraftbegrenzer bekannt, in welchen die Gurtkraftbegrenzung prinzipiell durch die Verdrehung eines Torsionsstabes erreicht wird. Solche Gurtkraftbegrenzer weisen generell einen Flansch, eine Spindel zum Auf- und Abrollen des Gurtes, sowie einen Torsionsstab auf. Der Flansch wird bei einem Unfall mit Hilfe einer Verriegelungsvorrichtung verdrehsicher mit dem Kfz-Aufbau verbunden, wobei sich das auf die Spindel aufgewickelte Gurtband mit einer sich aus dem Torsionsmoment des Torsionsstabes ergebenden begrenzten Kraft abspulen kann.

Ferner wurden zweistufige Gurtkraftbegrenzer vorgeschlagen, bei denen das Gurtkraftniveau in einer zweiten zusätzlichen Stufe reduziert wird. Bisherige Ansätze sind jedoch sehr aufwendig und zu teuer.

Aus der DE 296 13 044 U1 ist ein Gurtaufroller mit einer drehbaren Gurtspule bekannt. Es ist ein Torsionsstab vorgesehen, der über eine Kerbverzahnung mit der Spule verbunden ist und über Sperrscheiben drehbar am Fahrzeug angebracht ist. Eine Sperrklinke dient dem Sperren der Drehbarkeit des Torsionsstabes. In die Gurtspule sind Scherstifte integriert, die die Gurtspule gegen eine Drehung in Gurtabwickelrichtung blockieren.

Die vorliegende Erfindung hat zur Aufgabe, einen zweistufigen Gurtkraftbegrenzer zu schaffen, der mit möglichst geringem konstruktiven Aufwand eine zuverlässige Gurtkraftbegrenzung bereitstellt.

Diese Aufgabe wird durch die in den unabhängigen Ansprüchen angegebene Erfindung gelöst. Vorteilhafte Ausgestaltungen der Erfindung sind den Unteransprüchen zu entnehmen.

Erfindungsgemäß ist ein Gurtkraftbegrenzer für ein Fahrzeug geschaffen, mit: einer drehbaren Spindel zum Auf- und Abrollen eines Gurtes; einem Torsionsstab, der einerseits mit der Spindel verbunden und andererseits drehbar an dem Fahrzeug angebracht ist; einer Sperrvorrichtung zum Sperren der Drehbarkeit des Torsionsstabes; und einem Stift zur lösbaren Hemmung einer Rotation der Spindel.

Insbesondere kann der Gurtkraftbegrenzer einen mit der Spindel verbundenen Flansch aufweisen, der mit und relativ zu der Spindel drehbar ist, wobei der Torsionsstab einerseits mit der Spindel und andererseits mit dem Flansch verbunden ist, sowie eine Sperrvorrichtung zum Sperren einer Rotation des Flansches, wobei der Stift zur lösbaren Hemmung einer Rotation des Flansches relativ zu der Spindel ausgebildet ist.

Unter Hemmung ist eine Sperrung oder eine Erschwerung der Rotation des Flansches relativ zu der Spindel zu verstehen. Diese Hemmung ist aufhebbar, so dass nach Aufhebung die Verdrehung des Flansches relativ zu der Spindel durch den Torsionsstab gesteuert wird.

Somit kann eine zweistufige Kraftbegrenzung mit einfachen Mitteln erreicht werden.

Die Konsistenz des Stiftes kann derart sein, dass dessen Hemmwirkung auf die Spindel durch Anlegen eines vorbestimmten Drehmomentes bei gleichzeitiger Sperrung der Flanschrotation aufhebbar ist. Somit wird die durch den Stift bewirkte erste Stufe der Kraftbegrenzung nach Überschreiten des vorbestimmten Drehmomentes durch eine zweite, vorzugsweise geringere und durch den Torsionsstab bestimmte Kraftbegrenzung ersetzt.

In einer Ausgestaltung ist der Stift durch einen Scherstift gebildet, der so ausgebildet ist, dass dieser bei einem vorbestimmten auf die Spindel wirkenden Drehmoment und gleichzeitiger Sperrung der Flanschrotation abschert, wodurch die Hemmung der Rotation des Flansches relativ zu der Spindel aufhebbar ist. Durch einen Scherstift, der den durch den Torsionsstab gebildeten Kraftbegrenzer bis zum Erreichen der Grenzlast blockiert, danach abschert und dadurch die Kraftbegrenzung freigibt, wird die Anforderung des eingangs genannten Standards erfüllbar bei gleichzeitigem optimalen Schutz des Insassen vor Verletzungen.

Speziell in Hinblick auf diesen Standard kann die Konsistenz des Scherstiftes so gewählt sein, dass das vorbestimmte Drehmoment einer auf den Gurt wirkenden Gurtkraft von mindestens 6672 N entspricht. Somit kann ein Gurtbandauszug von (den vorgeschriebenen) 508 mm vor Erreichen einer Gurtkraft von 6672 N verhindert werden. Andererseits liegt die auf den Fahrzeuginsassen wirkende Gurtkraft nach Abscheren des Scherstiftes auf einem Niveau, das optimal in Hinblick auf einen Schutz des Insassen vor Verletzungen ist.

Durch verschiedene Werkstoffe für den Scherstift kann die Scherkraft an die vorhandenen Gurtwinkel und Spindeldurchmesser, die den wirksamen Radius der Krafteinleitung bestimmen, angepasst werden, so dass die Grenzlast sicher unter dem spezifizierten Gurtbandauszug erreicht wird.

In einer alternativen Ausgestaltung ist der Stift derart ausgebildet, dass dessen Hemmwirkung auf die Spindel durch Anlegen eines vorbestimmten Drehmomentes über einen vorbestimmten Gurtauszugsweg bei gleichzeitiger Sperrung der Flanschrotation aufhebbar ist. In dieser Ausgestaltung erfolgt das Umschalten auf die durch den Torsionsstab bestimmte Kraftbegrenzung erst nach einem solchen Gurtauszugsweg. Auch hierdurch wird eine zweistufige Kraftbegrenzung mit einfachen Mitteln geschaffen.

Insbesondere kann der Stift durch einen verbiegbaren Deformationspin gebildet sein, und der Flansch eine in den Hohlraum mündende Kulisse aufweisen, wobei durch Angreifen eines vorbestimmten anhaltenden Drehmomentes an die Spindel eine Verdrehung des Flansches relativ zu der Spindel auslösbar ist, wodurch der Deformationspin in die Kulisse hineingezwungen, dabei verbogen und aus dem Hohlraum herausgezogen wird, und die Hemmung der Rotation des Flansches relativ zu der Spindel aufhebbar ist. Diese Ausgestaltung ist besonders einfach herstellbar, so dass die Kosten des Gurtkraftbegrenzers gering gehalten werden können. Auch ist eine Nachrüstung bereits hergestellter Gurtkraftbegrenzer möglich.

Die Kulisse verläuft vorzugsweise senkrecht zur und im wesentlichen halbkreisförmig um die Drehachse des Flansches. Außerdem verläuft die Kulisse vorzugsweise in der der Spindel zugewandten Grundfläche des Flansches. Durch Länge und Verlauf der Kulisse kann auch bestimmt werden, welche Länge der zu verwendende Deformationspin haben kann. Durch die Länge des Deformationspins wiederum kann die Dauer der anfänglichen Kraftbegrenzung eingestellt werden.

In einer Ausgestaltung weisen die Spindel und der Flansch jeweils einen sich der Länge nach im wesentlichen parallel zu deren Drehachse verlaufenden Hohlraum zur Aufnahme des Stiftes auf. Auch dieses Merkmal unterstützt die einfache Herstellbarkeit des Gurtkraftbegrenzers und ermöglicht eine Nachrüstbarkeit bereits hergestellter Gurtkraftbegrenzer.

Erfindungsgemäß ist darüber hinaus ein Verfahren geschaffen, zur Verringerung der Verletzungsgefahr eines Fahrzeuginsassen mit Hilfe eines Rückhaltesystems, das einen Crash-Sensor, einen Dreipunkt-Sicherheitsgurt und eine Einrichtung zur Gurtkraftbegrenzung aufweist, wobei im Falle eines Unfalls, unmittelbar nach Detektieren eines Unfalls durch den Crash-Sensor zunächst ein rascher und kurzzeitiger Anstieg der Gurtkraft auf ein erhöhtes Kraftniveau zugelassen wird, das oberhalb desjenigen Kraftniveaus liegt, welches die Einrichtung zur Gurtkraftbegrenzung bei beginnender Gurtkraftbegrenzung einnimmt, und anschließend die Gurtkraft von dem erhöhten Kraftniveau abgesenkt wird, bevor der Vorgang der Gurtkraftbegrenzung einsetzt.

Dieses Verfahren löst die oben angegebene Aufgabe insbesondere dadurch, dass im Falle eines Unfalls unmittelbar nach Detektieren des Unfalls durch den Crash-Sensor zunächst ein rascher und kurzzeitiger Anstieg der Gurtkraft auf ein erhöhtes Kraftniveau zugelassen wird, das oberhalb desjenigen Kraftniveaus liegt, welches die Einrichtung zur Gurtkraftbegrenzung bei beginnender Gurtkraftbegrenzung einnimmt, wobei anschließend die Gurtkraft von dem erhöhten Kraftniveau abgesenkt wird, bevor der Vorgang der Gurtkraftbegrenzung einsetzt.

Es wird somit ein zeitlich definierter und kurzzeitiger Anstieg der Gurtkraft auf ein erhöhtes Kraftniveau zugelassen, das oberhalb des Kraftniveaus bei einsetzender Gurtkraftbegrenzung liegt, beispielsweise oberhalb eines Kraftniveaus von etwa 4,5 kN. Hierdurch wird die Gefahr einer Verletzung des Fahrzeuginsassen deutlich verringert, da sich überraschenderweise herausgestellt hat, dass ein früher und kurzzeitiger Anstieg der Gurtkraft oberhalb eines erhöhten Kraftniveaus von etwa 4,5 kN äußerst vorteilhaft ist. Da unmittelbar nach Auslösen des Crash-Sensors die Relativgeschwindigkeit Fahrzeug - Insasse relativ niedrig ist, wird hier der Fahrzeuginsasse auch bei einem erhöhten Kraftniveau der Gurtkraft nur niedrigen Belastungswerten ausgesetzt. Andererseits wird - bei dieser niedrigen Belastung - der Fahrzeuginsasse möglichst rasch an das maximale Kraftniveau der Einrichtung zur Gurtkraftbegrenzung angekoppelt. Erfindungsgemäß wird also die maximale Gurtkraft, welcher der Fahrzeuginsasse ausgesetzt wird, bewusst zu einem sehr frühen Zeitpunkt übersteuert. Hierdurch werden die auf den Fahrzeuginsassen wirkenden Belastungen mehr reduziert als bei Verwendung einer herkömmlichen Einrichtung zur Gurtkraftbegrenzung, die ein Energieabsorptionselement aufweist.

Bevorzugt liegt das erhöhte Kraftniveau oberhalb von etwa 4,5 kN, insbesondere im Bereich von etwa 6 bis 9 kN. Hierbei kann das Kraftniveau, welches die Einrichtung zur Gurtkraftbegrenzung bei beginnender Gurtkraftbegrenzung einnimmt, im Bereich von etwa 4 bis 5 kN liegen.

Besonders vorteilhaft ist es, wenn der rasche und kurzzeitige Anstieg der Gurtkraft auf ein erhöhtes Kraftniveau sehr frühzeitig, d.h. etwa 25 bis 35 ms nach Auslösen des Crash-Sensors eingeleitet wird und wenn dieser Anstieg der Gurtkraft auf das erhöhte Kraftniveau etwa 5 bis 15 ms andauert. Auch ist es vorteilhaft, wenn sich der Anstieg der Gurtkraft an einen Straffervorgang, d.h. an ein Straffen des Gurtes mit Hilfe eines Gurtstraffers, anschließt.

Das Ansteigen der Gurtstraffer auf das erhöhte Kraftniveau kann beispielsweise durch das Abscheren von Scherstiften eingeleitet werden, die im Bereich eines Gurtaufrollers vorgesehen sind. Das Absenken der Gurtkraft vor Einsetzen der Gurtkraftbegrenzung kann durch Lösen von miteinander in Eingriff stehenden Reibelementen eingeleitet werden. Ebenso ist es vorteilhaft, das Ansteigen und Absenken der Gurtkraft durch eine unter Last öffnende und schließende Kupplung zu bewirken. In diesem Fall wird der bewusste Anstieg der Gurtkraft dadurch verursacht, dass zum Öffnen der Kupplung unter Last eine zusätzliche Kraft aufgewendet werden muss. Nachdem die Kupplung vollständig gelöst worden ist, sinkt die Gurtkraft wieder ab, vorzugsweise auf das Niveau des Gurtkraftbegrenzers.

Zur Steuerung der Gurtkraftbegrenzung in der zweiten Stufe kann auf bekannte Weise ein Torsionsstab verwendet werden, der durch die auf das Gurtband wirkende Kraft tordiert wird und dadurch Energie dissipiert. Hierbei kann dann die Gurtkraft auf das Kraftniveau abgesenkt werden, welches demjenigen des Torsionsstabes entspricht.

Die Erfindung wird nun anhand von Ausführungsbeispielen in bezug auf die Zeichnungen erklärt, und es zeigen:
Figur 1 einen Querschnitt durch einen Gurtkraftbegrenzer nach einer ersten Ausgestaltung der Erfindung;
Figur 2 eine perspektivische Ansicht der Einzelteile des Gurtkraftbegrenzers aus Figur 1;
Figuren 3 und 4 Diagramme, die den Verlauf des Gurtauszugsweges abhängig von der Gurtauszugskraft für mehrere Gurtsysteme darstellen;
Figur 5 einen Querschnitt durch einen Gurtkraftbegrenzer nach einer zweiten Ausgestaltung der Erfindung;
Figur 6 eine schematische Draufsicht auf eine Grundseite des Flansches des Gurtkraftbegrenzers aus Figur 5;
Figur 7 eine weitere schematische Draufsicht auf die Grundseite des Flansches mit abgebogenem Haltepin;
Figur 8 ein Diagramm, das eine mögliche Einstellung des Gurtauszugsweges abhängig von der Gurtkraft für den Gurtkraftbegrenzer der zweiten Ausgestaltung zeigt;
Figur 9 das Ergebnis eines Testversuches zur Illustration des erfindungsgemäßen Verfahren; und
Figur 10 die bei dem Testversuch von Figur 13 erzielten Kopfbeschleunigungen an einem Dummy-Testkopf.

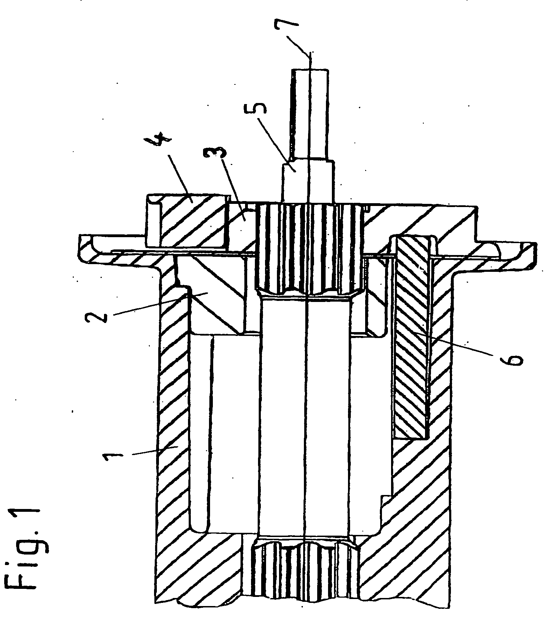

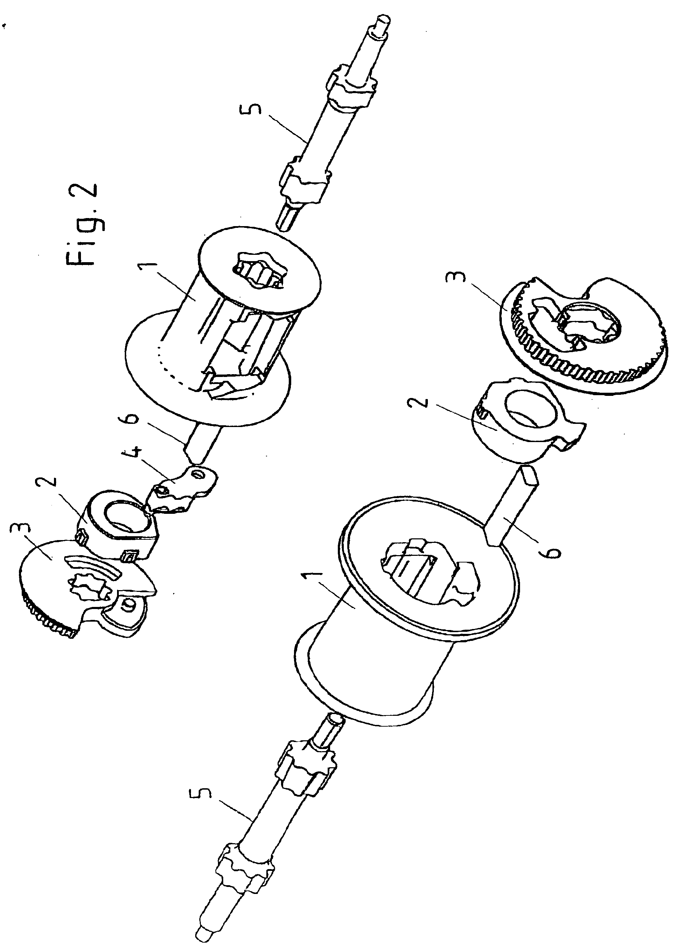

Figur 1 zeigt schematisch den Querschnitt eines Kraftbegrenzers für ein Gurtsystem nach einem ersten Ausführungsbeispiel der Erfindung. Figur 2 zeigt die Einzelteile des Begrenzers in perspektivischer Ansicht. Der Kraftbegrenzer umfasst eine drehbare Spindel 1 mit einem Spindellager 2, auf der ein nicht gezeigter Haltegurt auf- und abrollbar ist. An dem einen entlang ihrer Drehachse liegenden Ende der Spindel 1 ist ein relativ zur Spindel 1 drehbarer Flansch 3 angeordnet. Außerdem ist eine Sperrklinke 4 vorgesehen, die bei einem Unfall den Flansch 3 arretiert.

Weiterhin ist ein Torsions- oder Drehstab 5 vorgesehen, der an beiden Enden einen Zahnkranz aufweist, mittels derer der Drehstab 5 in entsprechenden Aussparungen der Spindel 1 bzw. des Flansches 3 verdrehsicher verankert ist. Der Drehstab 5 arretiert die Spindel 1 und den Flansch 3 miteinander, so dass im Ruhezustand des Begrenzers (d.h. in Abwesenheit eines Unfalls) die Spindel 1 und der Flansch 3 gemeinsam um eine Drehachse 7 rotieren können, um den Gurt auf die Spindel 1 auf- oder von dieser abzurollen.

Die beiden Enden des Drehstabes 5 können relativ zueinander verdreht werden. Diese Eigenschaft wird dazu verwendet, eine Gurtkraftbegrenzung herbeizuführen.

Der Begrenzer weist außerdem einen Scherstift 6 auf, der parallel zu dem Drehstab in einer Aufnahme in der Spindel 1 und dem Flansch 3 verläuft. Der Scherstift 6 verhindert bis zu einer durch dessen Stabilität bestimmten Schwelle ein Verdrehen der Spindel 1 und des Flansches 3 relativ zueinander.

Bei einem Unfall verankert die Sperrklinke 4 den Flansch 3 und somit das eine Ende des Drehstabes 5 am Rahmen der Gurtanordnung. Da der Flansch 3 mittels des Scherstiftes 6 mit der Spindel 1 kraftschlüssig verbunden ist, wird dadurch auch die Spindel 1 am Rahmen der Gurtanordnung verankert. Auf die Spindel wirkt nun ein durch den in den Gurt eintauchenden Fahrzeuginsassen verursachtes Drehmoment.

In Abwesenheit des Scherstiftes 6 würde sich der Drehstab 5 abhängig von diesem Drehmoment verdrehen, der Gurt weiter ausgerollt und als Folge dessen die auf den Fahrzeuginsassen wirkende Gurtkraft reduziert. Der Scherstift 6 verhindert jedoch anfänglich ein Rotieren der Spindel 1 und des Flansches 3 relativ zueinander, und somit eine Aktivierung der Gurtkraftbegrenzung. Erst wenn das Drehmoment einen vorbestimmten, d.h. von der gewählten Stabilität des Scherstiftes 6 abhängigen Wert überschreitet, schert der Scherstift 6 ab, wodurch der Kraftschluss zwischen der Spindel 1 und dem Flansch 3 gelöst wird. Danach findet eine Kraftbegrenzung wie zu Beginn dieses Absatzes beschrieben statt.

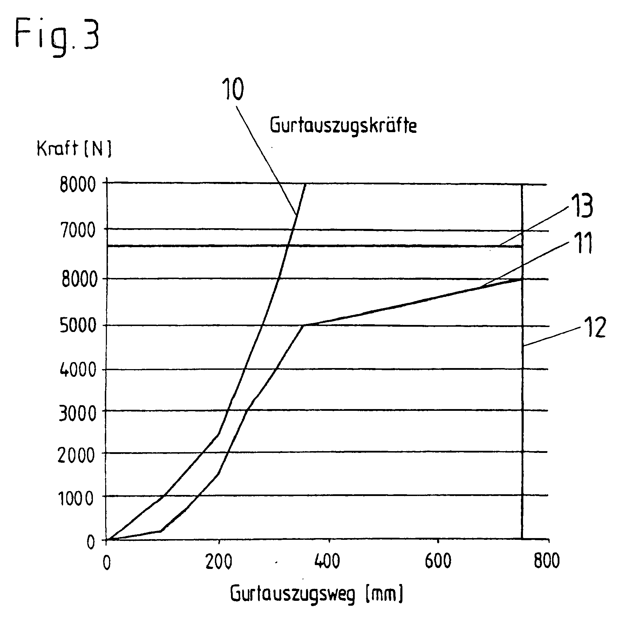

Figur 3 zeigt ein Diagramm der Gurtauszugskraft in Abhängigkeit vom Gurtauszugsweg bei verschiedenen Gurtvorrichtungen. Kurve 10 zeigt den Verlauf für eine Gurtvorrichtung ohne jegliche Kraftbegrenzung. Kurve 11 zeigt den Verlauf für ein herkömmliches Gurtsystem mit Kraftbegrenzung. Wie zu sehen, wird der durch den eingangs beschriebenen Test vorgeschriebene kritische Gurtauszugsweg 12 überschritten, bevor die kritische Gurtkraft 13 erreicht ist. In Figur 3 liegt der kritische Gurtauszugsweg beispielhaft bei ca. 750 mm. Dieser Wert ist allerdings beliebig einstellbar.

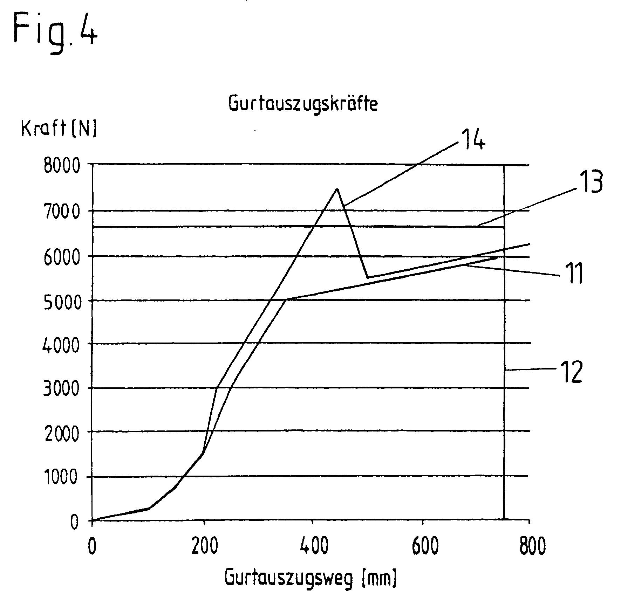

In Figur 4 sind die entsprechenden Kurven für ein Gurtsystem mit herkömmlichem Kraftbegrenzer (Kurve 11) und für ein Gurtsystem mit einem Begrenzer nach der ersten Ausgestaltung der Erfindung (Kurve 14) verglichen. Wie zu sehen ist, überschreitet die Gurtauszugskraft die kritische Schwelle 13, bevor der kritische Gurtauszugsweg 12 erreicht wird.

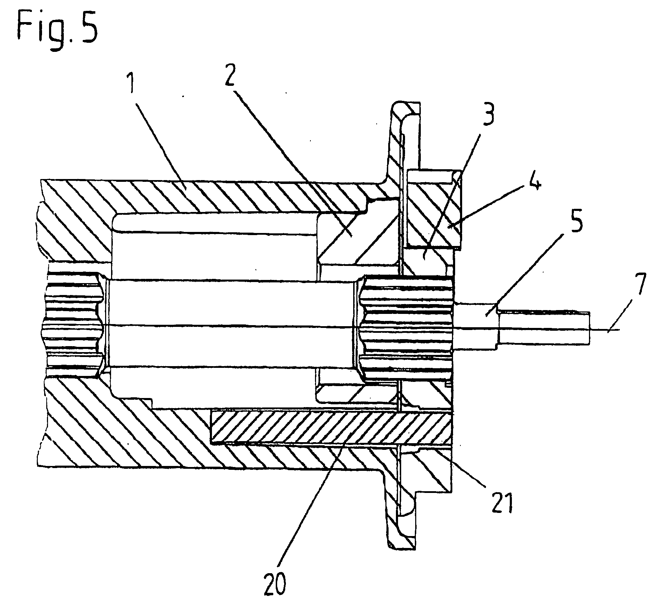

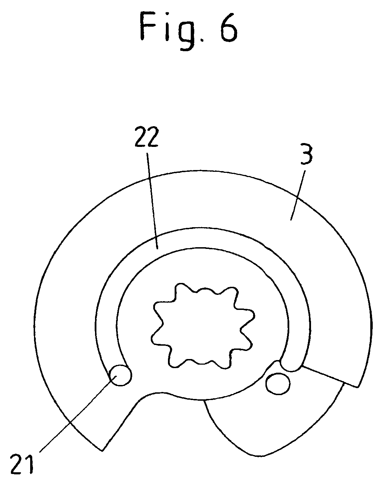

Figur 5 zeigt den Querschnitt eines Kraftbegrenzers nach einer zweiten Ausgestaltung der Erfindung. In dieser Ausgestaltung ist anstatt des Scherstiftes 6 der ersten Ausgestaltung ein Verformungspin 20 vorgesehen. Der Pin 20 verläuft innerhalb des Flansches 3 in einem Loch 21 (siehe auch Figur 6).

Figur 6 zeigt eine schematische Draufsicht auf die der Spindel 1 zugewandte Seite des Flansches 3 der zweiten Ausgestaltung. Wie erwähnt weist der Flansch ein Loch 21 auf, in welchem das eine Ende des Pins 20 verläuft. Weiterhin ist eine Führungskulisse 22 zur Aufnahme des Pins 20 bei einem Unfall vorgesehen:

Wie bezüglich der ersten Ausgestaltung erwähnt bewirkt die Sperrklinke 4 ein Arretieren des Flansches 3 relativ zur Spindel 1. Auf den Gurt wirkt jedoch gleichzeitig eine hohe Zugkraft, durch welche ein Drehmoment auf die Spindel 1 ausgeübt wird. Bleibt dieses Drehmoment unter einem vorbestimmbaren Wert, so verhindert der Pin 20 ein Verdrehen des Flansches 3 und der Spindel 1 relativ zueinander. Übersteigt das Drehmoment diesen Wert jedoch, so werden die Spindel 1 und der Flansch 3 relativ zueinander verdreht, der Pin 20 aus der Aufnahme in der Spindel 1 herausgezogen, verbogen, und in die Kulisse 22 gepresst.

Durch die dafür erforderliche Verformungskraft wird der Gurtbandauszug zusätzlich anfänglich gehemmt, bis nach einer gewissen relativen Verdrehung der Spindel 1 und des Flansches 3 der Pin vollständig aus der Aufnahme in der Spindel 1 herausgezogen und in die Kulisse 22 gebogen ist. Der Pin 20 wirkt nun einer relativen Verdrehung der Spindel 1 und des Flansches 3 nicht mehr entgegen.

Die relative Verdrehung der Spindel 1 und des Flansches 3 wird nunmehr nur noch durch den Drehstab 5 gehemmt. Das Gurtkraftniveau wird also jetzt durch den Drehstab 5 bestimmt. Hierdurch entsteht das gewünschte degressive zweistufige Gurtkraftniveau.

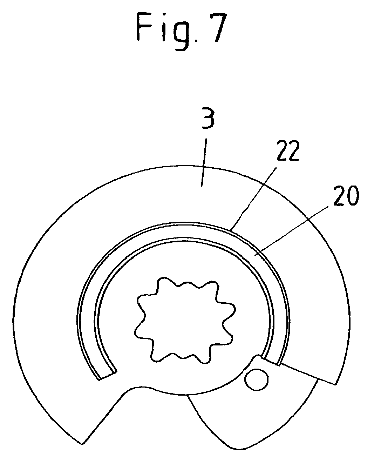

Figur 7 illustriert schematisch den in die Führungskulisse 22 des Flansches 3 gebogenen Pin 20.

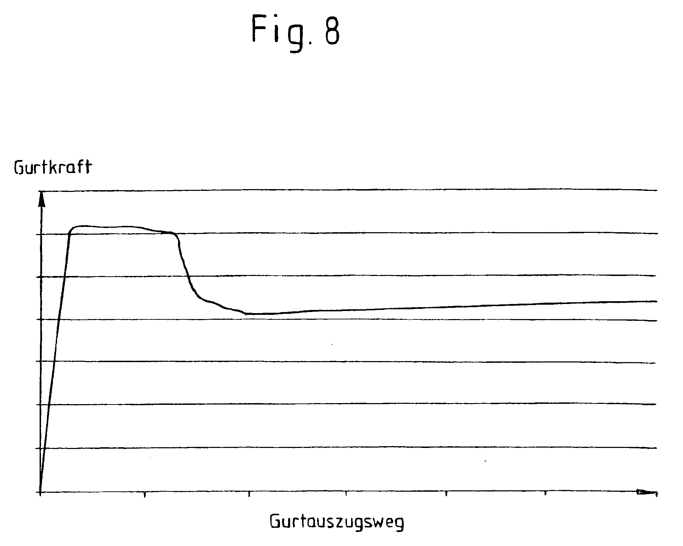

Figur 8 illustriert ein Diagramm, das den Gurtauszugsweg in Abhängigkeit von der Gurtkraft für die zweite Ausgestaltung des Gurtkraftbegrenzers zeigt. Wie zu sehen ist, steigt die Gurtkraft erst steil an und verbleibt dann vorerst auf einem höheren Niveau. Dieses Kraftniveau wird durch das Herausziehen und Verbiegen des Pins 20 bestimmt. Der Verlauf dieses Kraftniveaus hängt direkt vom zu verbiegenden Deformationspinquerschnitt ab und kann daher durch die konstruktive Ausgestaltung dieses Querschnittes entlang seiner Länge beeinflusst werden.

Anschließend sinkt die Gurtkraft auf ein niedrigeres Niveau. Dieses Kraftniveau ist durch die Verdrehung des Drehstabes 5 bestimmt.

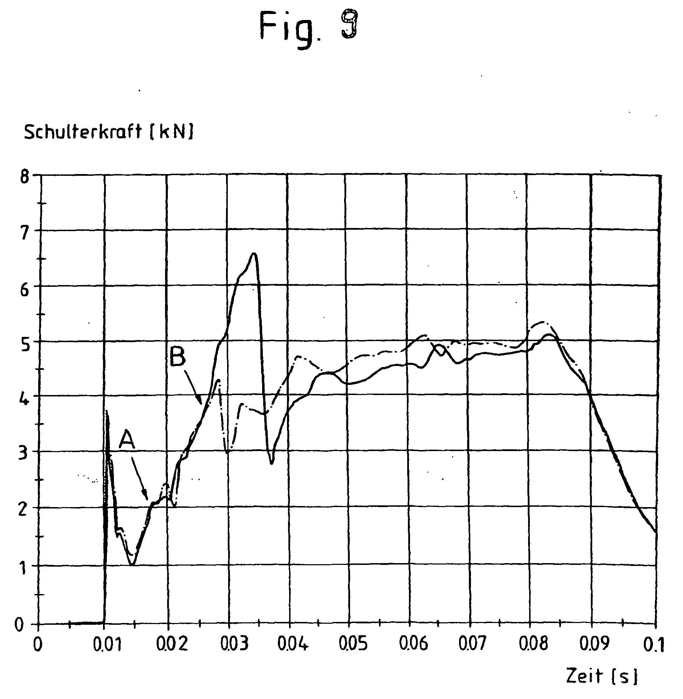

Figur 9 zeigt das Ergebnis eines Testversuches, das bei einem Test mit einem dynamischen Schlitten erzielt wurde, der mit einer Geschwindigkeit von etwa 55 km/h bewegt wurde. In dem Diagramm ist die im Gurtband gemessene Kraft (Schulterkraft) über der Zeit dargestellt. Der verwendete 3-Punkt-Sicherheitsgurt umfasste einen Gurtaufroller, einen Gurtstraffer und eine Einrichtung zur Gurtkraftbegrenzung.

Der in Figur 9 strichpunktierte Graph stellt einen Kraftverlauf mit nur geringer Übersteuerung dar, wohingegen der mit einer durchzogenen Linie dargestellte Graph die Gurtkraft mit einer starken Übersteuerung, d.h. mit einem bewussten kurzzeitigen und relativ hohen Anstieg, zeigt. Erfindungsgemäß wird jeweils sehr frühzeitig, d.h. etwa 25 ms nach Beginn des Aufpralls ein definierter Anstieg der Gurtkraft bewirkt. Dieser Zeitpunkt liegt zeitlich kurz nach Beenden des durch den Gurtstraffer bewirkten Straffervorgangs, der etwa 15 - 20 ms nach Beginn des Aufpralls stattfindet. Der mit dem Pfeil A in Fig. 13 bezeichnete Anstieg der Gurtkraft ist durch den herkömmlichen Gurtkraftstraffvorgang ausgelöst. Der sich daran unmittelbar anschließende Kraftanstieg, der mit dem Pfeil B bezeichnet ist, lässt die Gurtkraft auf ein Kraftniveau von etwa 4,25 bzw. 6,5 kN ansteigen, wobei anschließend ein Absenken der Gurtkraft auf ein Kraftniveau von etwa 3 kN erfolgt. Dieses untere Kraftniveau entspricht dem aktuellen Kraftniveau der verwendeten Energieabsorptionseinrichtung in Form eines Torsionsstabes. Durch diese Einrichtung zur Kraftbegrenzung erfolgt anschließend ein allmählicher Anstieg auf ein annähernd konstantes Kraftniveau von etwa 4,5 kN.

Wie Fig. 9 zeigt, wird der erfindungsgemäße Kraftpeak der Schulterkraft etwa 25 ms nach Beginn des Aufpralls eingeleitet und dauert bis etwa 30 bis 37 ms nach Beginn des Aufpralls an. Anschließend bewegt sich die Gurtkraft auf ein im wesentlichen konstantes Niveau im Bereich von etwa 4,5 bis 5 kN.

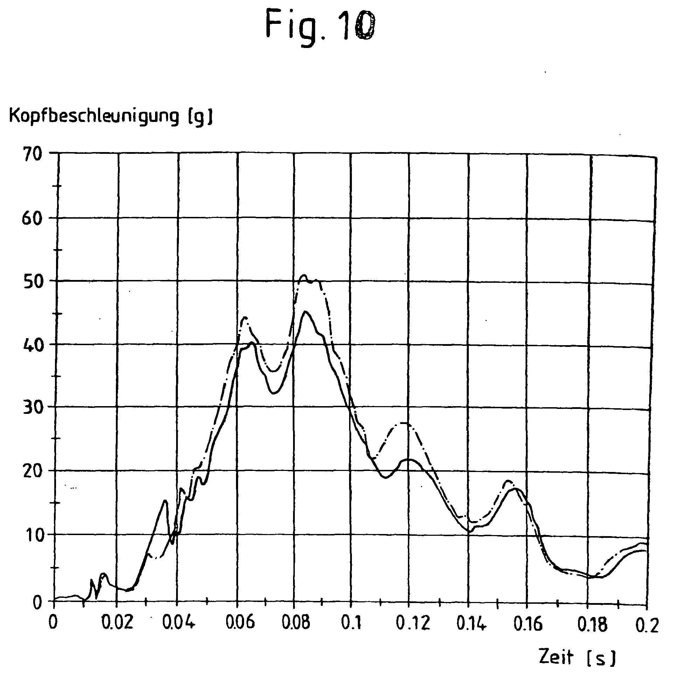

Fig. 10 zeigt die bei dem Testversuch von Fig. 10 erzielten Kopfbeschleunigungen, die an einem Dummy-Testkopf gemessen wurden. Wie zu erkennen ist, wird durch das zu einem früheren Zeitpunkt erfolgte starke Übersteuern (durchgezogene Linie) die Gurtkraft - verglichen zu einem weniger starken Übersteuern (strichpunktierte Linie) - zu einem späteren Zeitpunkt eine starke Reduzierung der Kopfbeschleunigung erzielt. Bei den dargestellten Beispielen wird bei etwa 85 ms eine Reduzierung der Kopfbeschleunigung um etwa 5g erreicht.

Das erfindungsgemäße Verfahren kann mit Hilfe einer Kupplung durchgeführt werden, die sich unter Last öffnen lässt, wobei durch die für das Lösen erforderliche Öffnungskraft in Höhe des gewünschten Kraftpeaks eingestellt werden kann.

Bei der erfindungsgemäßen Vorrichtung ist innerhalb des Gurtaufrollers, der auch die Gurtstraffereinheit umfasst, eine Kupplung zwischen Gurtstrafferantrieb und Gurtspindel vorgesehen. Am Ende des Gurtstraffvorgangs wird durch Einsteuern eines Schaltelementes diese Kupplung aktiviert, so dass die Gurtkraft wie gewünscht ansteigt (Bereich B in Fig. 9). Je nach Auslegung der Kupplung kann ein geringerer Anstieg (strichpunktierte Linie) oder ein stärkerer Anstieg (durchgezogene Linie) der Gurtkraft erreicht werden. Erst nachdem die Gurtkraft so weit angestiegen ist, dass die Kupplung vollständig öffnet, erfolgt ein Absinken der Gurtkraft, da die Gurtspindel dann vollständig von dem Strafferantrieb entkoppelt ist. Die Gurtkraft fällt dann auf das Kraftniveau der Einrichtung zur Gurtkraftbegrenzung ab, d.h. durch die auf das Gurtband ausgeübte Kraft wird das Gurtband von der Spindel abgewickelt, wodurch der zwischen Spindel und Rahmen eingekoppelte Torsionsstab tordiert wird.

Anzumerken ist, dass die Erfindung nicht auf die beschriebenen Ausführungsbeispiele beschränkt ist, sondern Modifikationen im Rahmen des durch die Ansprüche festgelegten Schutzbereiches umfasst.

## Patentansprüche

1. Gurtkraftbegrenzer für ein Fahrzeug mit einer drehbaren Spindel(1) zum Auf- und Abrollen eines Gurtes, einem Torsionsstab(5), der einerseits mit der Spindel(1) verbunden und andererseits drehbar an dem Fahrzeug angebracht ist, einer Sperrvorrichtung zum Sperren der Drehbarkeit des Torsionsstabes(5) und einem Stift(6, 20) zur lösbaren Hemmung einer Rotation der Spindel(1),
**dadurch gekennzeichnet,**
**dass** der Stift (6, 20) als separates Element ausgebildet ist.

2. Gurtkraftbegrenzer nach Anspruch 1, mit:
einem mit der Spindel(1) verbundenen Flansch(3), der mit und relativ zu der Spindel(1) drehbar ist, wobei der Torsionsstab(5) einerseits mit der Spindel(1) und andererseits mit dem Flansch(3) verbunden ist; und
einer Sperrvorrichtung zum Sperren einer Rotation des Flansches(3), wobei der Stift(6, 20) zur lösbaren Hemmung einer Rotation des Flansches(3) relativ zu der Spindel(1) ausgebildet ist.

3. Gurtkraftbegrenzer nach Anspruch 2, wobei die Konsistenz des Stiftes(6, 20) derart ist, dass dessen Hemmwirkung auf die Spindel(1) durch Erreichen eines vorbestimmten auf die Spindel(1) wirkenden Drehmomentes bei gleichzeitiger Sperrung der Flanschrotation aufhebbar ist.

4. Gurtkraftbegrenzer nach Anspruch 3, wobei der Stift(6) durch einen Scherstift(6) gebildet ist, der so ausgebildet ist, dass dieser bei einem vorbestimmten auf die Spindel(1) wirkenden Drehmoment und gleichzeitiger Sperrung der Flanschrotation abschert, wodurch die Hemmung der Rotation des Flansches(3) relativ zu der Spindel(1) aufhebbar ist.

5. Gurtkraftbegrenzer nach einem der Ansprüche 2 bis 4, wobei das vorbestimmte Drehmoment einer auf den Gurt wirkenden Gurtkraft von mindestens 6672 N entspricht.

6. Gurtkraftbegrenzer nach Anspruch 2, wobei der Stift(6, 20) derart ausgebildet ist, dass dessen Hemmwirkung auf die Spindel(1) durch Überschreiten eines vorbestimmten Drehmomentes über einen vorbestimmten Gurtauszugsweg bei gleichzeitiger Sperrung der Flanschrotation aufhebbar ist.

7. Gurtkraftbegrenzer nach Anspruch 6, wobei der Stift(20) durch einen verbiegbaren Deformationspin(20) gebildet ist, und der Flansch(3) eine in den Hohlraum(21) mündende Kulisse(22) aufweist, und wobei durch Angreifen eines vorbestimmten anhaltenden Drehmomentes an der Spindel(1) eine Verdrehung des Flansches(3) relativ zu der Spindel(1) auslösbar ist, wodurch der Deformationspin(20) in die Kulisse(22) hineingezwungen, dabei verbogen und aus dem Hohlraum(21) herausgezogen wird, und die Hemmung der Rotation des Flansches(3) relativ zu der Spindel(1) aufhebbar ist.

8. Gurtkraftbegrenzer nach Anspruch 6 oder 7, wobei die Kulisse(22) senkrecht zu Drehachse(7) des Flansches(3) verläuft.

9. Gurtkraftbegrenzer nach Anspruch 8, wobei die Kulisse im Wesentlichen halbkreisförmig um die Drehachse(7) des Flansches(3) verläuft.

10. Gurtkraftbegrenzer nach Anspruch 8 oder 9, wobei die Kulisse(22) in der der Spindel(1) zugewandten Grundfläche des Flansches(3) verläuft.

11. Gurtkraftbegrenzer nach einem der Ansprüche 2 bis 10, wobei die Spindel(1) und der Flansch(3) jeweils einen sich der Länge nach im Wesentlichen parallel zu deren Drehachse(7) verlaufenden Hohlraum(21) zur Aufnahme des Stiftes(6, 20) aufweisen.

12. Verfahren zur Verringerung der Verletzungsgefahr eines Fahrzeuginsassen mit Hilfe eines Rückhaltesystems, das einen Crash-Sensor, einen Dreipunkt-Sicherheitsgurt und eine Einrichtung zur Gurtkraftbegrenzung gemäß einem der vorhergehenden Ansprüche aufweist, wobei im Falle eines Unfalls unmittelbar nach Detektieren eines Unfalls durch den Crash-Sensor zunächst ein rascher und kurzzeitiger Anstieg der Gurtkraft auf ein erhöhtes Kraftniveau zugelassen wird, das oberhalb desjenigen Kraftniveaus liegt, welches die Einrichtung zur Gurtkraftbegrenzung bei beginnender Gurtkraftbegrenzung einnimmt und anschließend die Gurtkraft von einem erhöhten Kraftniveau abgesenkt wird, bevor der Vorgang der Gurtkraftbegrenzung einsetzt.

13. Verfahren nach Anspruch 12, wobei das erhöhte Kraftniveau oberhalb von etwa 4,5 kN liegt, insbesondere im Bereich von etwa 6-9 kN.

14. Verfahren nach Anspruch 13, wobei das Kraftniveau, welches die Einrichtung zur Gurtkraftbegrenzung bei beginnender Gurtkraftbegrenzung einnimmt, im Bereich von etwa 4-5 kN liegt.

15. Verfahren nach einem der Ansprüche 12 bis 14, wobei der rasche und kurzzeitige Anstieg der Gurtkraft auf ein erhöhtes Kraftniveau etwa 25-35 ms nach Auslösen des Crash-Sensors eingeleitet wird und etwa 5-15 ms andauert.

16. Verfahren nach einem der Ansprüche 12 bis 15, wobei das Ansteigen der Gurtkraft auf das vorbestimmte Kraftniveau durch das Abscheren von Scherstiften(6) eingeleitet wird.

17. Verfahren nach einem der Ansprüche 12 bis 16, wobei das Ansteigen der Gurtkraft auf das vorbestimmte Kraftniveau durch Lösen einer Kupplung eingeleitet wird.

18. Verfahren nach einem der Ansprüche 12 bis 17, wobei das Absenken der Gurtkraft durch Lösen miteinander in Eingriff stehender Reibelemente eingeleitet wird.

19. Verfahren nach einem der Ansprüche 12 bis 18, wobei zur Gurtkraftbegrenzung ein Torsionsstab(5) verwendet wird, und dass die Gurtkraft auf das Kraftniveau abgesenkt wird, welches demjenigen des Torsionsstabes(5) entspricht.

20. Verfahren nach einem der Ansprüche 12 bis 19, wobei der Anstieg der Gurtkraft auf ein erhöhtes Kraftniveau nach einem Straffen des Sicherheitsgurtes zugelassen wird.

## Claims

1. Belt force limiter for a vehicle with a rotatable spool (1) for winding and unwinding a belt, a torsion bar (5), which is fastened at one end to the spool (1) and at the other end is mounted for rotation on a vehicle, a locking device to block rotation of the torsion bar (5) and a pin (6, 20) for releasable inhibiting a rotation of the spool (1) **characterized in that** the pin (6, 20) is formed as a separate element.

2. Belt force limiter according to claim 1 with a flange (3) attached to the spool (1) which can rotate with and relative to the spool (1), a the torsion bar (5) being attached at one end to the spool (1) and at the other end to the flange (3), and a locking device for blocking rotation of the flange (3) whereby the pin (6, 20) being made for the releasable inhibition of rotation of the flange (3) relative to the spool.

3. Belt force limiter according to claim 2 whereby the consistency of the pin (6, 20) is being such that its inhibiting action on the spool (1) can be ended by the reaching of a predetermined torque acting on the spool (1) with simultaneous locking of the flange rotation.

4. Belt force limiter according to claim 3 wherein the pin (6) is formed of a shear pin (6) which is so configured that, at a predetermined torque acting on the spool (1) and a upon simultaneous blocking of the flange rotation, it shears off, thereby cancelling the inhibition of the rotation of the flange (3) relative to the spool (1).

5. Belt force limiter according to anyone of the claims 2 to 4 wherein the predetermined torque corresponds to a belt force of at least 6672 N acting on the belt.

6. Belt force limiter according to claim 2 wherein the pin (6, 20) is configured such that its blocking action on the spool (1) can be cancelled by the exceeding of a predetermined torque beyond a predetermined belt extraction length with simultaneous blockage of the flange rotation.

7. Belt force limiter according to claim 6 wherein the pin (20) is formed of a bendable deformation pin (20), and the flange (3) has a slot opening (22) into the cavity (21), and wherein the application of predetermined persistent torque to the spool (1) a turning of the flange (3) relative to the spool (1) can be started, whereby the deformation pin (20) is forced into the slot (22), bend, and drawn out of its cavity (21), and the inhibition of the rotation of the flange (3) relative to the spool (1) can be cancelled.

8. Belt force limiter according to claim 6 or 7 wherein the slot (22) runs perpendicular to the axis of rotation (7) of the flange (3).

9. Belt force limiter according to claim 8 wherein the slot (22) runs substantially semicirculary around the axis of rotation (7) of the flange (3).

10. Belt force limiter according to claim 8 or 9 wherein the slot (22) runs in the face of the flange (3) that faces the spool (1).

11. Belt force limiter according to anyone of claims 2 to 10 wherein the spool (1) and the flange (3) have each a cavity (21) running in length substantially parallel to the axis of rotation (7) for the accommodation of the pin (6, 20).

12. Method for reducing the danger of injury to a vehicle occupant by means of a restraining system which has a crash sensor, a three-point safety belt and a system for belt force limitation according to anyone of the preceding claims wherein in case of an accident, immediately after detection of an accident by the crash sensor, first a rapid and brief increase of the belt force to an elevated level of force is permitted which is above the level of force which the system for belt force limitation assumes upon commencement of the belt force limitation and then the belt force is reduced from an elevated level of force before the process of belt force limitation begins.

13. Method according to claim 12, wherein the elevated level of force is above about 4.5 kN, especially in the range of about 6-9 kN.

14. Method according to claim 13, wherein the level of force which the system for belt force limitation assumes when belt force limitation begins, is in the range of about 4-5 kN.

15. Method according to any one of claims 12 to 14, wherein the rapid and brief increase of the belt force to an elevated level of force is initiated about 25-35 ms after the crash sensor is activated and lasts for about 5-15 ms.

16. Method according to any one of claims 12 to 15, wherein the increase of the belt force to the preset level of force is initiated by the shearing off of shear pins (6).

17. Method according to any one of claims 12 to 16, wherein the increase of the belt force to the preset level of force is initiated by the release of a clutch.

18. Method according to anyone of claims 12 to 17, wherein the reduction of the belt force is initiated by the disengagement of frictional elements which are in engagement with one another.

19. Method according to any one of claims 12 to 18, wherein a torsion bar (5) is used for belt force limitation, and that the belt force is lowered to the level of force which corresponds to that of the torsion bar (5).

20. Method according to any one of claims 12 to 19, wherein the increase of the belt force to an elevated level of force after a tightening of the safety belt is permitted

## Revendications

1. Limiteur de force dans un enrouleur de ceinture de sécurité pour un véhicule, comprenant une broche rotative (1) destinée à enrouler et dérouler une ceinture de sécurité, une barre de torsion (5) qui d'une part est reliée à la broche (1) et d'autre part est aménagée de manière rotative sur le véhicule, un dispositif de verrouillage destiné à verrouiller la possibilité de rotation de la barre de torsion (5) et un goujon (6, 20) pour le blocage desserrable d'une rotation de la broche (1),
**caractérisé en ce que**
le goujon (6, 20) est conçu comme un élément séparé.

2. Limiteur de force dans un enrouleur de ceinture de sécurité selon la revendication 1, comprenant :
une bride (3) reliée à la broche (1), qui peut être amenée en rotation avec la broche (1) et par rapport à celle-ci, la barre de torsion (5) étant reliée d'une part à la broche (1) et d'autre part à la bride (3) ; et
un dispositif de verrouillage pour verrouiller une rotation de la bride (3), le goujon (6, 20) étant conçu pour le blocage desserrable d'une rotation de la bride (3) par rapport à la broche (1).

3. Limiteur de force dans un enrouleur de ceinture de sécurité selon la revendication 2, dans lequel la consistance du goujon (6, 20) est telle que son action de blocage sur la broche (1) peut être supprimée lorsqu'un couple de rotation prédéfini agissant sur la broche (1) est atteint, en cas de verrouillage simultané de la rotation de la bride.

4. Limiteur de force dans un enrouleur de ceinture de sécurité selon la revendication 3, dans lequel le goujon (6) est formé par un goujon de cisaillement (6) qui est conçu de sorte que celui-ci réalise un cisaillement à l'occasion d'un couple de rotation prédéfini agissant sur la broche (1) et du verrouillage simultané de la rotation de la bride, en sorte que le blocage de la rotation de la bride (3) par rapport à la broche (1) peut être supprimé.

5. Limiteur de force dans un enrouleur de ceinture de sécurité selon l'une quelconque des revendications 2 à 4, dans lequel le couple de rotation prédéfini correspond à une force dans un enrouleur de ceinture de sécurité, agissant sur la ceinture, d'au moins 6672 N.

6. Limiteur de force dans un enrouleur de ceinture de sécurité selon la revendication 2, dans lequel le goujon (6, 20) est conçu de telle sorte que son action de blocage sur la broche (1) peut être supprimée par dépassement d'un couple de rotation prédéfini le long d'un trajet d'extraction de ceinture prédéfini, en cas de verrouillage simultané de la rotation de la bride.

7. Limiteur de force dans un enrouleur de ceinture de sécurité selon la revendication 6, dans lequel le goujon (20) est formé par un axe de déformation (20) flexible, et la bride (3) comprend une coulisse (22) débouchant dans la cavité (21) et dans lequel en appliquant un couple de rotation d'arrêt prédéfini sur la broche (1) il est possible de déclencher une rotation de la bride (3) par rapport à la broche (1), en sorte que l'axe de déformation (20) peut être enfoncé de force dans la coulisse (22), en étant ainsi fléchi et extrait de la cavité (21), et que le blocage de la rotation de la bride (3) par rapport à la broche (1) peut être supprimé.

8. Limiteur de force dans un enrouleur de ceinture de sécurité selon la revendication 6 ou 7, dans lequel la coulisse (22) s'étend perpendiculairement à l'axe de rotation (7) de la bride (3).

9. Limiteur de force dans un enrouleur de ceinture de sécurité selon la revendication 8, dans lequel la coulisse s'étend sensiblement en forme de demi-cercle autour de l'axe de rotation (7) de la bride (3).

10. Limiteur de force dans un enrouleur de ceinture de sécurité selon la revendication 8 ou 9, dans lequel la coulisse (22) s'étend dans la surface de base de la bride (3) tournée vers la broche (1).

11. Limiteur de force dans un enrouleur de ceinture de sécurité selon l'une quelconque des revendications 2 à 10, dans lequel la broche (1) et la bride (3) comprend respectivement une cavité (21) s'étendant selon la longueur sensiblement parallèlement à son axe de rotation (7), destinée à recevoir le goujon (6, 20).

12. Procédé de diminution des risques de blessure d'un occupant d'un véhicule à l'aide d'un système de retenue qui comprend un capteur d'accident, une ceinture de sécurité à trois points et un système de limitation de force pour un enrouleur de ceinture de sécurité selon l'une quelconque des revendications précédentes, dans lequel dans le cas d'un accident, immédiatement après que le capteur d'accident ait détecté un accident, on autorise une augmentation rapide et instantanée de la force dans l'enrouleur de ceinture de sécurité jusqu'à un niveau de force supérieur qui se situe au-dessus du niveau de force que reçoit le système de limitation de force pour l'enrouleur de ceinture de sécurité lorsque démarre la limitation de la force pour l'enrouleur de ceinture de sécurité et ensuite, la force dans un enrouleur de ceinture de sécurité est abaissée depuis un niveau de force supérieur avant que ne s'installe le processus de limitation de force pour l'enrouleur de ceinture de sécurité.

13. Procédé selon la revendication 12, dans lequel le niveau de force supérieur se situe au-dessus d'approximativement 4,5 kN, notamment dans la plage d'approximativement 6 à 9 kN.

14. Procédé selon la revendication 13, dans lequel le niveau de force occupé par le système de limitation de force pour l'enrouleur de ceinture de sécurité au début de la limitation de force pour l'enrouleur de ceinture de sécurité se situe dans la plage d'approximativement 4 à 5 kN.

15. Procédé selon l'une quelconque des revendications 12 à 14, dans lequel l'augmentation rapide et instantanée de la force dans l'enrouleur de ceinture de sécurité à un niveau de force supérieur est enclenchée approximativement 25 à 35 ms après un déclenchement du capteur d'accident et durant approximativement 5 à 15 ms.

16. Procédé selon l'une quelconque des revendications 12 à 15, dans lequel l'augmentation de la force dans l'enrouleur de ceinture de sécurité au niveau de force prédéfini est enclenchée par le cisaillement des goujons de cisaillement (6).

17. Procédé selon l'une quelconque des revendications 12 à 16, dans lequel l'augmentation de la force dans l'enrouleur de ceinture de sécurité au niveau de force prédéfini est enclenché par desserrement d'un accouplement.

18. Procédé selon l'une quelconque des revendications 12 à 17, dans lequel l'abaissement de la force dans un enrouleur de ceinture de sécurité est enclenché par le desserrement d'éléments de friction en engagement mutuel.

19. Procédé selon l'une quelconque des revendications 12 à 18, dans lequel une barre de torsion (5) est utilisée pour limiter la force dans un enrouleur de ceinture de sécurité, et dans lequel la force de ceinture dans l'enrouleur de ceinture de sécurité est abaissée au niveau de force qui correspond à celui de la barre de torsion (5).

20. Procédé selon l'une quelconque des revendications 12 à 19, dans lequel l'augmentation de la force dans l'enrouleur de ceinture de sécurité est autorisée à un niveau de force supérieur après tension de la ceinture de sécurité.
